# EUROPÄISCHE PATENTSCHRIFT

(11) **EP 2 599 921 B1**
(45) Veröffentlichungstag und Bekanntmachung des Hinweises auf die Patenterteilung: **29.03.2017**
(21) Anmeldenummer: 12006180.9
(22) Anmeldetag: 31.08.2012
(51) Int. Cl.: E01C 23/088

(54) **SELBSTFAHRENDE BAUMASCHINE UND VERFAHREN ZUM ANKOPPELN EINES HILFSANTRIEBS FÜR EINE FRÄSROTOR EINER BAUMASCHINE**
SELF-PROPELLED CONSTRUCTION MACHINE AND METHOD OF COUPLING AN AUXILIARY DRIVE FOR A MILLING ROTOR OF A SELF-PROPELLED CONSTRUCTION MACHINE
ENGIN DE CHANTIER AUTOMOTEUR ET PROCÉDÉ DE COUPLAGE D'UNE COMMANDE AUXILIAIRE POUR UN ROTOR DE FRAISAGE D'UN ENGIN DE CHANTIER

(30) Priorität: 01.12.2011 DE 102011119935
(43) Veröffentlichungstag der Anmeldung: 05.06.2013
(73) Patentinhaber: BOMAG GmbH, 56154 Boppard (DE)
(72) Erfinder: Wachsmann, Steffen, 56068 Koblenz (DE); Laugwitz, Niels, 56112 Lahnstein (DE); Zehbe, Jens-Martin, 38364 Schöningen (DE)
(74) Vertreter: Lang, Friedrich

(56) Entgegenhaltungen:
- DE-A1-102010 014 893
- DE-C1- 10 031 195

## Beschreibung

Die Erfindung betrifft eine selbstfahrende Baumaschine mit einem Fräsrotor sowie einem Hauptantrieb, der über eine schaltbare Kupplung an den Fräsrotor ankuppelbar ist, und einem Hilfsantrieb, der alternativ zum Hauptantrieb an den Fräsrotor ankuppelbar ist.

Beispiele für selbstfahrende Baumaschinen sind insbesondere Walzen, Müllverdichter, Straßenfräsmaschinen, Recycler, Bodenstabilisierer sowie stationäre und mobile Brecheranlagen. Sie weisen als Hauptantrieb einen Verbrennungsmotor auf, über welchen der Fahrantrieb sowie ein Fräsrotor und weitere Arbeitseinrichtungen angetrieben werden. Im Arbeitsbetrieb ist der Fräsrotor in eine Arbeitsposition abgesenkt, und er wird mit einer Betriebsdrehzahl betrieben.

Bei Wartungs- und Montagearbeiten am Fräsrotor einer Fräsmaschine, beispielsweise beim Ersetzen von Fräsmeißeln, ist es erforderlich, den Fräsrotor langsam und schrittweise mit kleinem Winkelversatz oder kontinuierlich zu bewegen, damit eine Bedienperson beliebigen Zugriff auf den gesamten Zylindermantel erhält, auch wenn der Fräsrotor in der Fräsmaschine eingebaut ist. Die erste Antriebseinheit, wenn sie der Hauptantrieb ist, ist dafür insbesondere wegen der hohen Drehzahl und Drehmoments, nicht geeignet. Eine Verwendung des Hauptantriebs ist aus Sicherheitsgründen hierfür auch nicht zulässig. Er muss daher immer abgeschaltet sein. Daher werden diese Arbeiten mit einer zweiten Antriebseinheit als Nebenantrieb durchgeführt. Bekannte Zuschaltungen dieses Nebenantriebs bei gleichzeitigem Abschalten des Hauptantriebs haben sich als relativ aufwändig erwiesen. Ein Beispiel für eine derartige Vorrichtung ist aus DE 10031195 C1 bekannt. Ferner ist aus der DE 10 2010 014 893 A1 eine selbstfahrende Straßenfräsmaschine bekannt, bei welcher der Kraftschluss zwischen einem Antrieb und der Fräswalze bzw. die zwischen diesen übertragene Antriebsenergie in der Rangierposition der Fräswalze reduziert wird.

Der Erfindung liegt die Aufgabe zu Grunde, eine selbstfahrende Baumaschine der eingangs genannten Art anzugeben, bei welcher eine Vorrichtung zum Zuschalten eines Nebenantriebs bei gleichzeitigem Abschalten des Hauptantriebs wenig Einbauraum in der Baumaschine beansprucht.

Diese Aufgabe wird dadurch gelöst, dass die Kupplung mit einer fixen Seite und abtriebseitig mit einer axial verschiebbaren Seite versehen ist, die zwischen einer eingerückten Position und einer ausgerückten Position verschiebbar ist, und dass die axial verschiebbare Seite gleichzeitig auch der ein- und ausrückbare Teil eines schaltbaren Getriebes ist, dessen fixer Teil vom Hilfsantrieb angetrieben wird, wobei das Getriebe und die Kupplung wechselweise über die axial verschiebbare Seite der Kupplung eingerückt oder ausgerückt sind.

Der Erfindung beruht auf dem Grundgedanken, dass die Schaltkupplung sowohl zum Öffnen und Schließen des Hauptantriebsstranges als auch zum Öffnen und Schließen des Hilfsantriebsstranges genutzt wird. Durch wechselweises Öffnen und Schließen wird sichergestellt, dass der Hauptantrieb und der Hilfsantrieb niemals gleichzeitig mit dem Fräsrotor in Eingriff sind. Wird die Schaltkupplung ausgerückt, wird der dabei zu durchlaufende Betätigungsweg genutzt, um die Kraftflüsse des Hilfsantriebs und des Hauptantriebs räumlich voneinander zu trennen. Die Erfindung hat den Vorteil, dass sich der Hilfsantrieb kostengünstig und bauraumsparend in die Schaltkupplung der Baumaschine integrieren lässt.

Vorteilhafte Weiterbildungen sind in den abhängigen Ansprüchen beschrieben.

Als Getriebe wird bevorzugt ein Zahnradgetriebe oder ein Reibradgetriebe verwendet. Für die Zahnradpaarungen sind besonders Stirnräder, Kegelräder oder Kronräder geeignet.

Bevorzugt ist die Kupplung als Scheibenkupplung oder Lamellenkupplung ausgebildet, und eine Scheibe bzw. Lamelle, insbesondere eine Druckscheibe, ist als Verbindungsstück mit dem Hilfsantrieb ausgebildet. Das hat den Vorteil, dass die Verbindung mit dem Hilfsantriebsstrang auf einfache Weise hergestellt werden kann. Das Verbindungsstück kann alternativ vorteilhafterweise auch als ein separates Stellglied ausgebildet sein, mit welchem eine Bewegung eines Kupplungselementes übertragen wird, beispielsweise eine axial verschiebbare Buchse oder Hohlwelle auf der Abtriebswelle des Hauptantriebs, welche der Bewegung der Druckscheibe oder der Lamellen folgt.

Als sehr zweckmäßig erweist es sich, dass die axial verschiebbare Seite der Kupplung mit einem Zahnkranz oder einem Reibkranz zur Wirkverbindung mit einem korrespondierenden Gegenstück auf der Seite des Hilfsantriebs ausgebildet ist.

Um zu vermeiden, dass der Hilfsmotor beim Ausrücken der Kupplung und Einrücken des Getriebes mit einer Drehzahl beaufschlagt wird, für die er nicht ausgelegt ist, weil der rotorseitige Teil des Antriebsstranges nachläuft, ist zweckmäßigerweise zwischen Hilfsantrieb und Kupplung ein Freilauf vorhanden. Der Freilauf verhindert, dass der Hilfsantrieb durch eine unzulässig hohe Drehzahl zerstört wird.

Nachstehend wird die Erfindung in einem Ausführungsbeispiel anhand der Zeichnungen weiter erläutert. Es zeigen schematisch:
- Fig. 1: eine selbstfahrende Baumaschine in Seitenansicht;
- Fig. 2: zwei Antriebsstränge der Baumaschine; und
- Fig. 3: eine Einzelheit der beiden Antriebsstränge gemäß Fig. 2 in zwei unterschiedlichen Betriebszuständen.

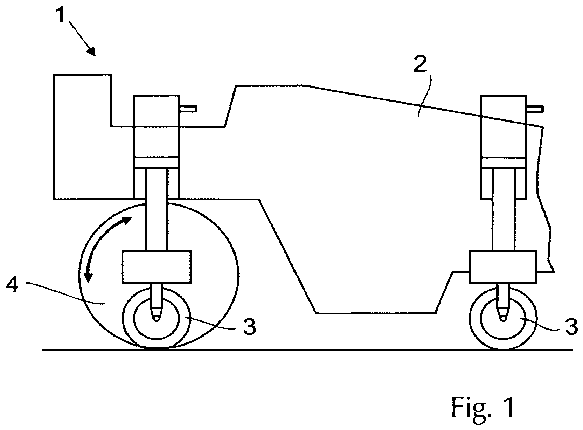

Gemäß Fig. 1 weist eine als Straßenfräse ausgebildete Baumaschine 1 zum Bearbeiten einer Verkehrsfläche einen Maschinenrahmen 2, Räder 3 und einen Fräsrotor 4 auf, der über den Rotormantel verteilt Fräszahne aufweist. In der Darstellung von Fig. 1 befindet sich der Fräsrotor 4 in angehobener Stellung, in welcher er frei drehbar ist und nicht mit der Verkehrsfläche in Eingriff steht. Da die mit Fräszähnen besetzte Mantelfläche des Fräsrotors 4 in dieser Position wegen des Maschinenrahmens 2 nur eingeschränkt zugänglich ist, muss der Fräsrotor 4 zu Wartungs- und Montagearbeiten in der angehobenen Position frei drehbar sein, was durch einen Doppelpfeil angedeutet ist.

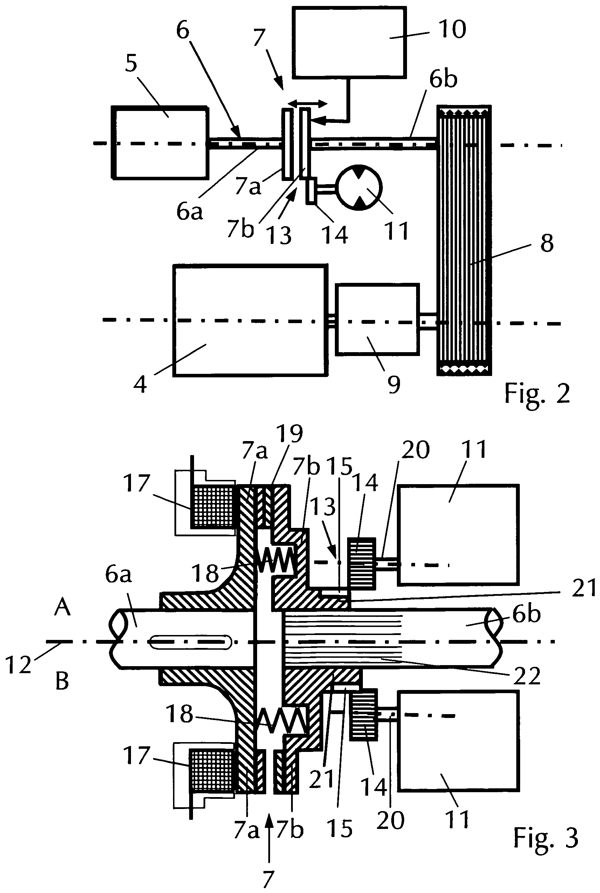

Der Fräsrotor 4 wird gemäß Fig. 2 über einen Hauptantriebsstrang angetrieben, der einen als Hauptantrieb 5 der Baumaschine 1 dienenden Verbrennungsmotor aufweist. Der Hauptantriebsstrang umfasst ferner eine Abtriebswelle 6 des Hauptantriebs 5, die über eine schaltbare Kupplung 7 in einen hauptantriebsseitigen Abschnitt 6a und einen rotorseitigen Abschnitt 6b trennbar ist, und beispielsweise über einen Riementrieb 8 mit einem Getriebe 9 des Fräsrotors 4 wirkverbunden ist. Die Kupplung 7 wird über eine Steuereinrichtung 10 betätigt. Der erste Antriebstrang dient zum Antreiben des Fräsrotors 4 im Fräsbetrieb, wobei typischerweise Rotordrehzahlen zwischen 80 bis 150 U/min vorliegen.

Alternativ zum Hauptantriebsstrang wird der Fräsrotor 4 ferner über einen Hilfsantriebsstrang mit einem Hilfsmotor 11 angetrieben, der im dargestellten Beispiel als Hydromotor ausgebildet ist. Zum Hilfsantriebsstrang gehören der rotorseitige Abschnitt 6b der Abtriebswelle 6 sowie der Riementrieb 8 und das Getriebe 9. Der Hilfsantrieb 11 ist typischerweise nur für relative geringe Drehzahlen ausgelegt, die geeignet sind, um den Fräsrotor 4 zu Wartungs- und Montagearbeiten zu drehen und um den Fräsrotor 4 auch in gezielten Winkelschritten weiter zu bewegen. Eine typische Drehzahl liegt zwischen 0,5 bis 2 U/min.

Die Kupplung 7 hat auch eine Umschaltfunktion zwischen dem Hauptantriebsstrang und dem Hilfsantriebsstrang. Der rotorseitige Teil der Kupplung 7 ist zu diesem Zweck gleichzeitig auch der ein- und ausrückbare Teil eines schaltbaren Getriebes 13, dessen fixer Teil vom Hilfsantrieb 11 angetrieben wird. Abhängig von ihrer Stellung stellt sie dabei mit dem rotorseitigen Teil entweder eine Wirkverbindung mit dem hauptantriebsseitigen Abschnitt 6a der Antriebswelle 6 oder mit dem fixen Teil des Hilfsantriebsstrangs her.

In dem dargestellten Beispiel ist die Kupplung 7 als Einscheibenkupplung mit einer fixen Schwungscheibe 7a am hauptantriebsseitigen Abschnitt 6a der Abtriebswelle und einer axial verschiebbaren rotorseitigen Druckscheibe 7b am rotorseitigen Abschnitt 6b der Abtriebswelle 6 ausgebildet. Die Druckscheibe 7b ist auf dem rotorseitigen Abschnitt 6b gemäß Doppelpfeil axial zwischen einer ersten Position A (Fig. 3) und einer zweiten Position B (Fig. 3) verschiebbar.

Fig. 3 veranschaulicht die erste Position A in der oberen Zeichnungshälfte und die Position B in der unteren Zeichnungshälfte getrennt durch die Mittenachse 12 der beiden Wellenabschnitte 6a, 6b. In der unteren Zeichnungshälfte ist die in der oberen Zeichnungshälfte dargestellte Vorrichtung gespiegelt zur Mittenachse 12 dargestellt. Die Kupplung 7 kann elektromagnetisch, mechanisch, hydrostatisch oder pneumatisch geschaltet werden. In der ersten Position A ist die Kupplung 7 entgegen der Vorspannung einer Feder 18 eingerückt, und zwischen der Schwungscheibe 7a und der Druckscheibe 7b sind Reibflächen 19 reibschlüssig aufeinander gedrückt. Der erste Antriebsstrang ist geschlossen. In der zweiten Position B ist die Kupplung 7 ausgerückt, wobei die Feder 18 die Druckscheibe 7b von der Schwungscheibe 7a weg drückt. Der erste Antriebsstrang ist unterbrochen. Die Druckscheibe 7b ist entlang einer Verzahnung 22 auf dem rotorseitigen Abschnitt 6b der Abtriebswelle 6 verschiebbar.

Das Getriebe 13 umfasst eine Zahnradpaarung aus einem Ritzel 14 auf einer Abtriebswelle 20 des Hilfsmotors 11 sowie einen Zahnkranz 15 auf der Druckscheibe 7b, der als Zylinderrad auf einem hohlzylindrischen Ansatz 21 der Druckscheibe 7b ausgeformt ist. Der Ansatz 21 befindet sich auf der Stirnfläche der Druckscheibe 7b, welche der Schwungscheibe 7a abgewandt ist, und sitzt auf dem rotorseitigen Abschnitt 6b der Abtriebswelle 6.

Das ortsfeste Ritzel 14 ist so angeordnet, dass der Zahnkranz 15 nur dann in Eingriff mit dem Ritzel 14 gelangt, wenn die Kupplung 7 ausgerückt ist, und dass der Zahnkranz 15 dann außer Eingriff mit dem Ritzel 14 ist, wenn die Kupplung 7 eingerückt ist. Das Getriebe 13 ist in der Position A der Kupplung 7 ausgerückt, d.h. das Ritzel 14 und der Zahnkranz 15 sind außer Eingriff. In der Position B der Kupplung 7 ist das Getriebe 13 eingerückt, d.h. das Ritzel 14 und der Zahnkranz 15 sind in Eingriff. Die Druckscheibe 7b stellt also wechselweise eine Kraftschlussverbindung zwischen dem Fräsrotor 4 (Fig. 2) und dem Hauptantrieb 5 oder dem Hilfsantrieb 11 dar.

Die Ankopplung des Hilfsantriebs 11 erfolgt also derart, dass der Hilfsantrieb 11 und der Hauptantrieb 5 beim Ein- und Ausrücken der schaltbaren Kupplung 7 wechselweise an- bzw. abgekoppelt werden, wobei die Druckscheibe 7b den Kraftfluss zum Fräsrotor 4 (Fig. 2) umschaltet.

Beim Antrieb des Rotors 4 in der Position B der Kupplung 7 kann durch eine Bedienperson sukzessiv Zugriff zur gesamten Mantelfläche des Rotors 4 (Fig. 2) und den dort angeordneten Fräszähnen erfolgen.

## Patentansprüche

1. Selbstfahrende Baumaschine (1) mit einem Fräsrotor (4) sowie einem Hauptantrieb (5), der über eine schaltbare Kupplung (7) an den Fräsrotor (4) ankuppelbar ist, und einem Hilfsantrieb (11), der alternativ zum Hauptantrieb (5) an den Fräsrotor (4) ankuppelbar ist,
**dadurch gekennzeichnet,**
**dass** die Kupplung (7) mit einer fixen Seite und abtriebseitig mit einer axial verschiebbaren Seite versehen ist, die zwischen einer eingerückten Position (A) und einer ausgerückten Position (B) verschiebbar ist, und dass die axial verschiebbare Seite gleichzeitig auch der ein- und ausrückbare Teil eines schaltbaren Getriebes (13) ist, dessen fixer Teil vom Hilfsantrieb (11) angetrieben wird, wobei das Getriebe (13) und die Kupplung (7) wechselweise über die axial verschiebbare Seite der Kupplung (7) eingerückt oder ausgerückt sind.

2. Selbstfahrende Baumaschine (1) nach Anspruch 1,
**dadurch gekennzeichnet,**
**dass** die Kupplung (7) als Scheibenkupplung oder Lamellenkupplung ausgebildet ist, und dass eine Scheibe oder Lamelle als Verbindungsstück mit dem Hilfsantrieb (11) ausgebildet ist.

3. Selbstfahrende Baumaschine (1) nach Anspruch 1 oder 2,
**dadurch gekennzeichnet,**
**dass** das Getriebe (13) als Zahnradgetriebe oder als Reibradgetriebe ausgebildet ist.

4. Selbstfahrende Baumaschine (1) nach Anspruch 3,
**dadurch gekennzeichnet,**
**dass** die axial verschiebbare Seite der Kupplung (7) als Druckscheibe (7b) mit einem Zahnkranz (15) zur Wirkverbindung mit einem Gegenstück auf Seiten des Hilfsantriebs (11) ausgebildet ist.

5. Selbstfahrende Baumaschine (1) nach Anspruch 3,
**dadurch gekennzeichnet,**
**dass** die axial verschiebbare Seite der Kupplung (7) mit einen Reibkranz zur Wirkverbindung mit einem korrespondierenden Gegenstück auf der Seite des Hilfsantriebs (11) ausgebildet ist.

6. Selbstfahrende Baumaschine (1) nach einem der vorhergehenden Ansprüche,
**dadurch gekennzeichnet,**
**dass** zwischen Hilfsantrieb (11) und Kupplung (7) ein Freilauf vorhanden ist.

7. Verfahren zum Ankoppeln eines Hilfsantriebs (11) für einen Fräsrotor (4) einer Baumaschine (1), die einen Hauptantrieb (5) mit einer schaltbaren Kupplung (7) und einen Hilfsantrieb (11) aufweist,
**dadurch gekennzeichnet,**
**dass** der Hilfsantrieb (11) und der Hauptantrieb (5) beim Ein- und Ausrücken der schaltbaren Kupplung (7) wechselweise an- bzw. abgekoppelt werden, wobei ein beweglicher Teil der Kupplung (7) den Kraftfluss zum Fräsrotor (4) umschaltet.

## Claims

1. Automotive construction machine (1), comprising a milling rotor (4) and a main drive (5) which can be coupled to the milling rotor (4) via an engageable clutch, and an auxiliary drive (11) which, as an alternative to the main drive (5), can be coupled to the milling rotor (4),
**characterized in that**
the clutch (7) is provided with a fixed side and, on the output side, with an axially displaceable side which is displaceable between an engaged position (A) and a disengaged position (B), and that the axially displaceable side is simultaneously also the engaging and disengaging part of a shiftable set of gears (13), the fixed part of which is driven by the auxiliary drive (11), the set of gears (13) and the clutch (7) being alternately engaged and disengaged via the axially displaceable side of the clutch (7).

2. Automotive construction machine (1) according to claim 1,
**characterized in that**
the clutch (7) is configured as a disk clutch or multi-plate clutch, and that a disk or plate is configured as a connecting element to the auxiliary drive (11).

3. Automotive construction machine (1) according to claim 1 or 2,
**characterized in that**
the set of gears (13) is configured as a set of toothed gears or as a set of friction gears.

4. Automotive construction machine (1) according to claim 3,
**characterized in that**
the axially displaceable side of the clutch (7) is configured as a pressure disk (7b) with a gear rim (15) for operative connection with a counterpart on the side of the auxiliary drive (11).

5. Automotive construction machine (1) according to claim 3,
**characterized in that**
the axially displaceable side of the clutch (7) is configured as a friction rim (15) for operative connection with a corresponding counterpart on the side of the auxiliary drive (11).

6. Automotive construction machine (1) according to one of the preceding claims,
**characterized in that**
a freewheel is provided between the auxiliary drive (11) and the clutch (7).

7. A method for coupling an auxiliary drive (11) for a milling rotor (4) of a construction machine (1), comprising a main drive (5) with an engageable clutch (7) and an auxiliary drive (11),
**characterized in that** the auxiliary drive (11) and the main drive (5) are alternately coupled and uncoupled during engagement and disengagement of the engageable clutch (7), a movable part of the clutch (7) switching the power flow to the milling rotor.

## Revendications

1. Engin de chantier automoteur (1), comprenant un rotor de fraisage (4) et une commande principale (5) qui peut être couplée au rotor de fraisage (4) par l'intermédiaire d'un accouplement débrayable (7), et une commande auxiliaire (11) qui, en alternative à la commande principale (5), peut être couplée au rotor de fraisage (4),
***caractérisé en* ce *que***
l'accouplement (7) est pourvu d'un côté fixe et, sur le côté sortie, d'un côté axialement déplaçable, qui peut être déplacé entre une position embrayée (A) et une position débrayée (B), et ***en ce que*** le côté axialement déplaçable est aussi en même temps la partie embrayable et débrayable d'une transmission débrayable (13) dont la partie fixe est entraînée par la commande auxiliaire (11), la transmission (13) et l'accouplement (7) étant alternativement embrayés et débrayés par l'intermédiaire du côté axialement déplaçable de l'accouplement (7).

2. Engin de chantier automoteur (1) selon la revendication 1,
***caractérisé en* ce *que***
l'accouplement (7) est formé en embrayage à disque ou en embrayage multidisque, et **en ce *que*** le disque ou le multidisque est formé en élément de raccordement à la commande auxiliaire (11).

3. Engin de chantier automoteur (1) selon la revendication 1 ou 2,
***caractérisé en* ce *que***
la transmission (13) est formée en transmission par engrenages ou en transmission à roues de friction.

4. Engin de chantier automoteur (1) selon la revendication 3,
***caractérisé en* ce *que***
le côté axialement déplaçable de l'accouplement (7) est formé en disque de pression (7b) avec une couronne dentée (15) pour une connexion fonctionnelle avec une contrepartie sur le côté de la commande auxiliaire (11).

5. Engin de chantier automoteur (1) selon la revendication 3,
***caractérisé en ce que***
le côté axialement déplaçable de l'accouplement (7) est formé en couronne de frottement (15) pour une connexion fonctionnelle avec une contrepartie correspondante sur le côté de la commande auxiliaire (11).

6. Engin de chantier automoteur (1) selon l'une quelconque des revendications précédentes, ***caractérisé en ce que***
une roue libre est présente entre la commande auxiliaire (11) et l'accouplement (7).

7. Procédé de couplage d'une commande auxiliaire (11) pour un rotor de fraisage (4) d'un engin de chantier (1), comprenant une commande principale (5) avec un accouplement débrayable (7), et une commande auxiliaire (11),
***caractérisé en* ce *que***
la commande auxiliaire (11) et la commande principale (5) sont alternativement accouplées et découplées pendant l'embrayage et le débrayage de l'accouplement débrayable (7), une partie mobile de l'accouplement (7) changeant la circulation de l'énergie au profit du rotor de fraisage.
